(19) Europäisches Patentamt
European Patent Office
Office européen des brevets

(11) Veröffentlichungsnummer: **0 001 578**
**B1**

(12) # EUROPÄISCHE PATENTSCHRIFT

(21) Anmeldenummer: **78101036.8**

(22) Anmeldetag: **30.09.78**

(51) Int. Cl.³: **C 08 J 3/28**, C 08 J 7/10, C 08 L 69/00

(54) **Modifizierte Polycarbonate und Verfahren zu ihrer Herstellung**

(30) Priorität: **13.10.77 DE 2746140**
**04.07.78 DE 2829257**

(43) Veröffentlichungstag der Anmeldung:
**02.05.79 Patentblatt 79/09**

(45) Bekanntmachung des Hinweises auf die Patenterteilung:
**03.09.80 Patentblatt 80/18**

(84) *Benannte Vertragsstaaten:*
**DE FR GB NL**

(56) Entgegenhaltungen:
**DE - A - 2 211 641**
**DE - A - 2 408 068**
**DE - B - 1 085 668**
**US - A - 3 787 302**

(73) Patentinhaber: **Bayer AG**
**Zentralbereich Patente, Marken und Lizenzen**
**D - 5090 Leverkusen 1, Bayerwerk (DE)**

(72) Erfinder: **Adelmann, Siegfried, Dr.**
**Bodelschwinghstrasse 18**
**D - 4150 Krefeld (DE)**
**Margotte, Dieter, Dr.**
**Wedelstrasse 48**
**D - 4150 Krefeld (DE)**
**Nouvertne, Werner, Dr.**
**Scheiblerstrasse 95**
**D - 4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Modifizierte Polycarbonate und Verfahren zu ihrer Herstellung

Polycarbonate aus aromatischen Dihydroxyverbindungen sind bekannt und haben aufgrund ihrer interessanten technologischen Eigenschaften Eingang in viele Anwendungsgebiete gefunden. Ebenso bekannt sind Polycarbonate, die am Aromaten Methylsubstituenten (DOS 2 063 050), Halogensubstituenten (DT—PS 1 221 012) oder ungesättigte Substituenten (DOS 1 595 703) tragen.

Ein gewisser Nachteil von aromatischen Polycarbonaten für spezielle Anwendungen besteht allerdings in der Unbeständigkeit gegen organische Lösungsmittel und in der Empfindlichkeit gegen Spannungsrißbildung.

Bekannt war außerdem, spezielle Polycarbonate mit Elektronenstrahlen zu vernetzen (siehe DT—OS 2 615 038).

Überraschenderweise wurde gefunden, daß thermoplastische aromatische Polycarbonate mit aromatisch gebundenen Halogen-, primären Alkyl-, sekundären Alkyl- und/oder Alkenyl-Substituenten nach Zusatz von 1 Gew.-% bis 5 Gew.-% vorzugsweise von 1 Gew.-% bis 3 Gew.-%, bezogen auf Gewicht an Polycarbonat, an Photoinitiatoren durch UV-Belichtung modifiziert werden können, so daß sie eine hervorragende Beständigkeit gegen organische Lösungsmittel und eine hohe Beständigkeit gegen Spannungsrißkorrosion bekommen. Darüberhinaus können die modifizierten Polycarbonate durch Zumischen eines Flammschutzmittels vor der UV-Bestrahlung auf einfache Weise äußerst flammfest (VO nach UL Subj. 94) gemacht werden.

Gemäß DE—AS 1085 668 ist zwar bekannt, Polycarbonate mit energiereichen Strahlen zu behandeln. Verbesserte Produkte werden jedoch nur erhalten, wenn eine engbegrenzte Strahlendosis angewandt wird.

Daraus war jedoch nicht abzuleiten, daß die Bestrahlung von Polycarbonaten mit UV-Licht, denen Flammschutzmittel eingearbeitet sind, zu Produkten mit erhöhter Flammschutzwirkung führt.

Gegenstand der vorliegenden Erfindung ist ein Verfahren zur Modifizierung von thermoplastischen aromatischen Polycarbonaten mit aromatisch gebundenen Halogen-, primären Alkyl-, sekundären Alkyl- und/oder Alkenyl-Substituenten, das dadurch gekannzeichnet ist, daß man diese Polycarbonate nach Zusatz von 1 Gew.-% bis 5 Gew.-%, vorzugsweise von 1 Gew.-% bis 3 Gew.-%, bezogen auf Gewicht an Polycarbonat, an Photoinitiatoren und von 0,05 Gew.-% bis 5 Gew.-%, vorzugsweise von 0,1 Gew.-% bis 2 Gew.-%, bezogen auf Gewicht an Polycarbonat, an Flammschutzmitteln, mit UV-Licht bestrahlt, wobei vorzugsweise eine Bestrahlungsdauer zwischen 15 sek. und 180 sek. eingehalten wird. Gegenstand der vorliegenden Erfindung sind außerdem modifizierte Polycarbonate, erhältlich nach dem erfindungsgemäßen Verfahren.

Gegenstand der vorliegenden Erfindung ist vorzugsweise das erfindungsgemäße Verfahren zur Modifizierung von thermoplastischen aromatischen Polycarbonaten mit aromatisch gebundenen Halogen-, primären Alkyl-, sekundären Alkyl- und/oder Alkenyl-Substituenten, die in bekannter Weise aus

a) 0—95 Mol-% (bezogen auf die Summe der Mole Diphenole I und II) an Diphenolen der Formel I

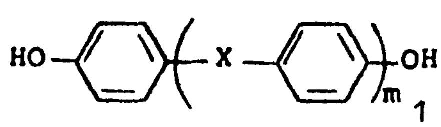

(I)

b) 5—100 Mol-% (bezogen auf die Summe der Mole Diphenole I und II) an Diphenolen der Formel II

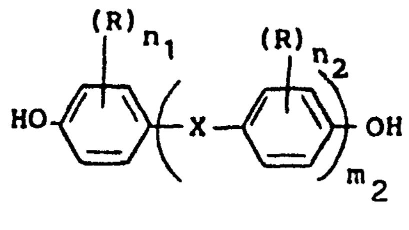

(II) und

c) 1 bis 5 Mol-% (bezogen auf die Summe der Mole Diphenole I und II) an Monophenolen der Formel III

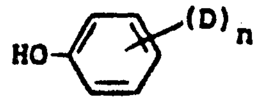

(III)

hergestellt sind, sowie die daraus nach dem erfindungsgemäßen Verfahren erhältlichen modifizierten Polycarbonate.

In den Formeln I, II und III bedeuten

X eine Einfachbindung, $C_1$—$C_8$-Alkylen, $C_2$—$C_8$-Alkyliden, $C_5$—$C_{15}$-Cycloalkylen, $C_5$—$C_{15}$-Cycloalkyliden, O, S, SO, $SO_2$ und

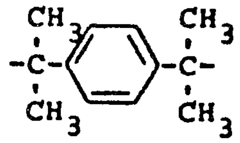

R Halogen, beispielsweise Chlor oder Brom, primäres Alkyl, beispielsweise mit 1—18 C-Atomen, sekundäres Alkyl, beispielsweise mit 3 bis 18 C-Atomen, und Alkenyl, beispielsweise mit 2—18 C-Atomen,

$m_1$,$m_2$ 0 oder 1, insbesondere 1,

$n_1$,$n_2$ ganze Zahlen zwischen 0 und 4, vorzugsweise 1 bis 2 und insbesondere 2, wobei die Summe $n_1$ und $n_2$ jeweils mindestens 1 sein muß,

D Wasserstoff, Halogen, beispielsweise Chlor oder Brom, Alkyl, beispielsweise mit 1—18 C-Atomen, und $\beta,\gamma$-ungesättigtes Alkyl, beispielsweise mit 3 bis 18 C-Atomen und

n eine ganze Zahl von 1 bis 5.

Beispiele für primäre Alkyl-Reste R sind Methyl, Äthyl, Propyl, Butyl, Isobutyl, Pentyl, Isoamyl, Neopentyl, Dodecyl und Stearyl.

Beispiele für sekundäre Alkyl-Reste R sind Isopropyl, sek.-Butyl, 2-Octyl und 2-Octadecyl.

Beispiele für Alkenyl-Reste R sind Vinyl, Isopropenyl, Allyl, Methallyl, Crotyl, Buten-(1)-yl, Isobutenyl, Penten-(1)-yl, 2-Methyl-buten-(1)-yl, 3-Methyl-buten-(1)-yl und Octen-(1)-yl.

Beispiele für die Alkyl-Reste D sind die Primären und sekundären Alkyl-Reste R, dazu, auch tert.-Alkyl-Reste wie tert.-Butyl oder tert.-Amyl.

Beispiele für $\beta,\gamma$-ungesättigtes Alkyl sind Allyl, Methallyl und Crotyl.

Die zur Modifizierung geeigneten thermoplastischen aromatischen Polycarbonate mit aromatisch gebundenen Halogen-, primären Alkyl-, sekundären Alkyl- und/oder Alkenyl-Substituenten haben mittlere Molekulargewichte $\bar{M}w$ zwischen etwa 10 000 und 200 000, ermittelt mittels Gelchromatographie nach vorheriger Eichung.

Es sind sowohl Homopolycarbonate als auch Copolycarbonate geeignet. Das Minimum an den für die UV-Bestrahlung wichtigen aromatisch gebundenen Halogen-, primären Alkyl-, sekundären Alkyl- und Alkenyl-Substituenten richtet sich einerseits nach Art und Menge des zugesetzten Photoinitiators und nach Bestrahlungsdauer und Bestrahlungsintensität. Im allgemeinen, unter den oben aufgeführten Modifizierungsbedingungen, sind etwa mindestens 2 dieser aromatisch gebundenen Substituenten im zu bestrahlenden Polycarbonatmolekül erforderlich. Das Maximum an diesem aromatisch gebundenen Substituenten ist im Prinzip nicht limitiert, sondern findet seine natürlich Grenze in der Herstellbarkeit der zu modifizierenden Polycarbonate.

Für die Herstellung der zur Modifizierung geeigneten thermoplastischen aromatischen Polycarbonate geeignete Diphenole sind beispielsweise Hydrochinon, Resorcin, Dihydroxydiphenyl, Bis - (hydroxyphenyl) - alkane, Bis - (hydroxyphenyl) - cycloalkane, Bis - (hydroxyphenyl) - sulfide, Bis - (hydroxyphenyl) - äther, Bis - (hydroxyphenyl) - sulfoxide, Bis - (hydroxyphenyl) - sulfone und $\alpha,\alpha'$ - Bis - (hydroxyphenyl) - diisopropylbenzole, sowie deren kernhalogenierte, durch primäre Alkylgruppen alkylierte, durch sek.-Alkylgruppen alkylierte und kernalkenylierte Verbindungen.

Derartige Diphenole sind beispielsweise in den US-Patenten 3 028 365, 2 999 835, 3 148 172 und 2 999 846, sowie in den deutschen Offenlegungsschriften 1 570 703, 2 063 050, 2 036 052, 2 211 956, 2 211 957, der französischen Patentschrift 1 561 518 und in der Monographie "H. Schnell, Chemistry and Physics of Polycarbonates, Interscience Publishers, New York, 1964, beschrieben.

Bevorzugte Diphenole gemäß Formel I sind beispielsweise Hydrochinon, 4,4' - Dihydroxydiphenyl, 2,2 - Bis - (4 - hydroxyphenyl) - propan, 2,4 - Bis - (4 - hydroxyphenyl) - 2 - methylbutan, Bis - (4 - hydroxyphenyl) - äther, Bis - (4 - hydroxyphenyl) - sulfid, Bis - (4 - hydroxyphenyl) - sulfon, 1,1 - Bis - (4 - hydroxyphenyl) - cylcohexan, 1,1 - Bis - (4 - hydroxyphenyl) - propan, 1,1 - Bis - (4 - hydroxyphenyl) - butan, Bis - (4 - hydroxyphenyl) - methan und $\alpha,\alpha'$ - Bis - (4 - hydroxyphenyl) - p - diisopropylbenzol.

Besonders bevorzugte Diphenole gemäß Formel I sind beispielsweise 2,2 - Bis - (4 - hydroxyphenyl) - propan, Bis - (4 - hydroxyphenyl) - äther, Bis - (4 - hydroxyphenyl) - sulfid und Bis - (4 - hydroxyphenyl) - sulfon.

Bevorzugte Diphenole gemäß Formel II sind beispielsweise:

Allylhydrochinon
Diallylhydrochinon
2,2-Bis-(3-allyl-4-hydroxyphenyl)-propan
3,3'-Diallyl-4,4'-dihydroxydiphenyl
3-Allyl-4,4'-dihydroxydiphenyl
2,2-Bis-(3-methyl-4-hydroxyphenyl)-propan
2,2-Bis-(3-chlor-4-hydroxyphenyl)-propan

Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
$\alpha,\alpha'$-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole gemäß Formel II sind beispielsweise
2,2-Bis-(3-allyl-4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan.

Es können auch beliebige Mischungen der vorgenannten Diphenole verwendet werden.

Geeignete Monophenole gemäß Formel III sind Phenol, Halogenphenole, Alkyl-phenole und Phenole mit $\beta,\gamma$-ungesättigten Alkylresten.

Bevorzugte Monophenole gemäß Formel III sind Phenol, 2,4-Dimethylphenol, p-Isopropylphenol, p-tert.-Butylphenol, p-Allyl-phenyl, 2,4-Dichlorphenol, 4-Chlorphenol, 4-Bromphenol und 2,4,6-Tribromphenol.

Die zur Modifizierung geeigneten thermoplastischen, aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Die Herstellung der erfindungsgemäß modifizierbaren Polycarbonate kann im wesentlichen nach folgenden zwei bekannten Verfahren (vgl. H. Schnell, Chemistry and Physics of Polycarbonates, Polymer Rev., Vol. IX, Seite 27 ff., Interscience Publishers) erfolgen: 1. In heterogener Phase (nach dem Phasengrenzflächenverfahren) und 2. in homogener Phase (nach dem sogenannten Pyridinverfahren).

Für das erfindungsgemäße Verfahren zur Modifizierung der Polycarbonate sind im Prinzip alle Polycarbonat-verträglichen Photoinitiatoren geeignet, so beispielsweise Photoinitiatoren auf Basis aliphatischer und aromatischer Ketone im weitesten Sinne wie beispielsweise unter Einbeziehung von Glyoxalaten und Chinonen. Ketone in engeren Sinne und Glyoxalate sind beispielsweise Acetophenon, Benzil, Benzoin, Benzoinmethyläther, Benzoinisopropyläther, Benzophenon, p-Chlorbenzophenon, p-Benzoylbenzophenon, Dibenzalaceton, Benzoylaceton, Benzylaceton, Desoxybenzoin, 2,4-Dimethylbenzophenon, 2,5-Diemethylbenzophenon, 3,4-Dimethylbenzophenon, 4-Benzoyldiphenyl, 9-Fluorenon, 4,4-Bis-(dimethylamino)-benzophenon, 4-Dimethylaminobenzophenon, Dibenzylketon, 4-Methylbenzophenon, Propiophenon, Benzanthron, Äthylphenylglyoxalat, tert.-Butylphenylglyoxalat, Trimethylsilylphenylglyoxalat und andere.

Die aromatischen Ketone bzw. Glyoxalate sind bevorzugt. Insbesondere werden Benzophenon, Benzoin, p-Benzoylbenzophenon, tert.-Butylphenylglyoxalat, Trimethylsilylphenylglyoxalat bevorzugt.

Ebenfalls können als Photoinitiatoren Chinone verwendet werden, z.B.: Anthrachinon, 1-Chloroanthrachinon, 2-Chloroanthrachinon, 2-Äthylanthrachinon, 1-Methylanthrachinon, 2-Methylanthrachinon, 2-Phenylanthrachinon und andere. Bevorzugte Chinone sind 2-Methylanthrachinon, 2-Chloroanthrachinon und 2-Äthylanthrachinon.

Andere geeignete Photoinitiatoren sind dem Fachmann bekannt und können den folgenden Veröffentlichungen entnommer werden: J. Kosar, "Light-Sensitive Systems", John Wiley & Sons, New York, 1965, Chapters 4 ("Unsaturated Compounds"), 5 ("Photopolymerization Processes") und 8 (Photopolymerization of Vinyl Monomers), "Chem. Revs. *68*, 125—151 (1968); J.F. Rabek "Photosensitized Processes in Polymer Chemistry: A. Review", Photchem. Photobiol. *7*, 5—57 (1968), G. Delzenne, "Sensitizers of Photopolymerization", Ind. Chim. Belge *24*, 739 — 764 (1959); C. M. McCloskey and J. Bond, "Photosensitizers for Polyester-vinyl polymerization", Ind. Eng. Chem. *47*, 2125—2129 (1955).

Die für das erfindungsgemäße Verfahren zur Modifizierung der Polycarbonate erforderliche UV-Bestrahlung erfolgt mit UV-Licht unter Verwendung von handelsüblichen UV-Strahlern, beispielsweise Philips HTQ 4 oder 7, Hanovia-Strahlern und anderen. Die Bestrahlungsdauer liegt je nach Gehalt an eingesetzten Photoinitiatoren und je nach Probenbeschaffenheit bei 15 bis 180 Sekunden.

Die für das erfindungsgemäße Verfahren zur Modifizierung der Polycarbonate geeigneten Flammschutzmittel sind beispielsweise die für die Flammfestmachung von Polycarbonaten bekannten und geeigneten Verbindungen und synergistisch wirkenden Substanzen, wie sie in den DT—OS 1 930 257, DT—OS 2 049 358, DT—OS 2 112 987, DT—OS 2 253 072 und anderen Literaturstellen beschrieben sind.

Geeignet sind z.B. Alkalisalze, insbesondere die in Polycarbonat löslichen, wie z.B. Kaliumisooctanat, Natriumisooctanat, Lithiumisooctanat, Kaliumperfluoroctanat, Natriumperfluoroctanat,

Lithiumperfluoroctanat, Kaliumsalze der 5-Äthyl-dioxan-1,3-yl-(5)-carbonsäure, Rubidiumisooctanat, Rubidiumperfluoroctanat, und die Alkalisalze der Perfluoralkansulfonsäure, wie Kaliumperfluormethansulfonat, Kaliumperfluoroctansulfonat und Kaliumperfluorbutansulfonat.

Des weiteren können Alkalisalze der Laurinsäure, Stearinsäure, Ölsäure, des Phthalsäuremonobenzylesters, des Adipinsäuremonobutylesters, der p-Octylbenzoesäure, p-tert.-Butylbenzoesäure, der 3-(3,5-di-tert.-Butyl-4-hydroxyphenyl)-propionsäure und des Diglykolsäuremonodecylesters verwendet werden.

Das erfindungsgemäße Verfahren zur Modifizierung der Polycarbonate erfolgt in zwei Stufen. Die erste Stufe ist die Einarbeitung des Photoinitiators und eines Flammschutzmittels über.

a) Lösung und Isolierung als Film, oder über

b) eine Compoundierung bei 280—330°C zu Granulat,

und die zweite Stufe ist die UV-Bestrahlung bis zur Vernetzung, gegebenenfalls nach vorheriger Formgebung zu Platten oder anderen Spritzgußteilen.

Weitere Varianten des erfindungsgemäßen Verfahrens zur Modifizierung der Polycarbonate sind nach Einarbeitung von Flammschutzmitteln, Tauchen oder Besprühen entsprechender Polycarbonatformkörper in bekannter Weise beispielsweise analog dem Verfahren der DT—OS 2 211 641 und beispielsweise unter Verwendung von Lösungen der einzusetzenden Photoinitiatoren in gegenüber Polycarbonat inerten Lösungsmitteln. Die menge des zu applizierenden Photoinitiators richtet sich vor allem nach der zu vernetzenden Oberfläche und Struktur der Polycarbonatformkörper sowie nach der Intensität der angestrebten Vernetzungsreaktion. Die zu applizierenden Mengen an Photoinitiator liegen jeweils in der Größenordnung von $10^{-3}$ g/cm² Polycarbonatoberfläche bei einer zu vernetzenden Oberflächenschicht von durchschnittlich 100 $\mu$m. Die so behandelten Polycarbonatformkörper werden dann in bekannter Weise getrocknet und mittels UV-Bestrahlung modifiziert.

Benutzt man für das Verfahren der vorliegenden Erfindung eine andere energiereiche Strahlung, beispielsweise Elektronenstrahlung insbesondere Kathodenstrahlung, so läßt sich bei geeigneter Sensibilisierung die erfindungsgemäße Modifizierung der Polycarbonate ebenfalls erreichen.

Die erfindungsgemäß erhältlichen modifizierten Polycarbonatformmassen sind gegenüber organischen Lösungsmitteln beständig und zeichnen sich gegenüber herkömmlichen Polycarbonaten durch eine verbesserte Spannungsrißbeständigkeit aus. Schon bei geringen Zusätzen an Flammschutzmittel erhält man Produkte, die nach UL Subj. 94 mit VO beurteilt werden.

Die erfindungsgemäß erhältlichen modifizierten Polycarbonate können als Folien und Formkörper überall dort eingesetzt werden, wo hohe Beständigkeit gegen organische Lösungsmittel bei hoher Spannungsrißbeständigkeit gefordert wird.

Die folgenden Beispiele sollen den Erfindungsgegenstand näher erläutern. Die angegebenen relativen Viskositäten wurden in Methylenchlorid bei 25°C einer Konzentration von 5 g/l gemessen.

Beispiel 1 Herstellung der Polycarbonate:

Herstellung von hochmolekularem Copolycarbonat aus 2,2-Bis-(3,5-dimethyl-4-hydroxyphenyl)-propan und 2,2-Bis-(4-hydroxyphenyl)-propan (95/5 Mol-Tl.) mit Kettenabbrecher 2,6-Dimethylphenol.

In 600 ml Wasser werden 18,4 g (0,46 Mol) NaOH gelöst und dann unter Rühren 600 ml Methylenchlorid, 54 g (0,19 Mol) 2,2-Bis-(3,5-dimethyl-4-hydroxyphenyl)-propan, 2,3 g (0,01 Mol) 2,2-Bis-(4-hydroxyphenyl)-propan und 0,585 g (0,0048 Mol) 2,6-Dimethylphenol zugegeben. Dann werden unter kräftigem Rühren 49,5 g (0,5 Mol) Phosgen gasförmig eingeleitet. Nach dem Einleiten des Phosgens werden 2,02 g (0, 02 Mol) Triäthylamin zugegeben und 3 Std. lang kräftig gerührt. Die gesamte Reaktion wird unter Stickstoff und bei 20—25°C durchgefürt. Während des Phosgeneinleitens wird ein pH-Wert von 11—13 und nach der Triäthylaminzugabe ein pH-Wert von 13 durch Zutropfen von 50 %iger NaOH aufrechterhalten. Im Anschluß an das Nachrühren wird der Ansatz aufgearbeitet. Die organische Phase wird mit 1 l Methylenchlorid verdünnt und dann 2mal mit 1 l 5-%iger wäßriger Phosphorsäure und anschließend mit Wasser elektrolytfrei gewaschen.

Die Aufarbeitung erfolgt durch Abdampfen des Lösungsmittels in geeigneten Ausdampfaggregaten, wie z.B. einer Ausdampfschnecke. Die relative Lösungsviskosität beträgt 1,30. Das daraus resultierende Molekulargewicht (Gewichtsmittel) beträgt 38.000.

Beispiel 2

Nach dem in Beispiel 1 beschriebenen Verfahren wird ein Polycarbonat hergestellt aus 87 Mol% 2,2-Bis-(4-hydroxyphenyl)-propan, 10 Mol% 2,2-Bis-(3-allyl-4-hydroxyphenyl)-propan und 3 Mol% p-tert.-Butylphenol. Die relative Lösungsviskosität beträgt 1,30. Das daraus resultierende Molekulargewicht (Gewichtsmittel) beträgt 40,000.

Beispiel 3

Nach dem in Beispiel 1 beschriebenen Verfahren wird ein Polycarbonat hergestellt aus 86,5 Mol% 2,2-Bis-(4-hydroxyphenyl)-propan, 10 Mol% 2,2-Bis-(3,5-dichlor-4-hydroxyphenyl)-propan und 3,5 Mol% 2,4-Dimethylphenol. Die relative Lösungsviskosität beträgt 1,30. Das daraus resultierende Molekulargewicht (Gewichtsmittel) beträgt 40.000.

Beispiel 4

Nach dem in Beispiel 1 beschriebenen Verfahren wird ein Polycarbonat aus 2,2-Bis-(4-hydroxyphenyl)- propan und p.-tert.-Butylphenol als Kettenregler hergestellt. Die relative Lösungsviskosität beträgt 1,29. Das daraus resultierende Molekulargewicht (Gewichtsmittel) beträgt 32,000.

Vergleichsbeispiele:

Die Polycarbonate aus den Beispielen 1 bis 4 werden in Methylenchlorid gelöst und nach Zugabe von 2 Gew.-% Benzophenon zu 100 $\mu$m starken Filmen verarbeitet und bei 120°C über Nacht getrocknet. Anschließend werden die Filme 15 und 180 Sekunden beidseitig im Abstand von 15 cm mit einem UV-Strahler Philips HTQ 4 (Quecksilberdampfhochdruckbrenner) bestrahlt. Die Filme werden mit Methylenchlorid behandelt und die vernetzten Anteile als unlösliche Fibrillen bzw. Filmstücke abfiltriert und nach Trocknung gravimetrisch bestimmt.

Als Folge der unterschiedlichen Vernetzung der Polycarbonate der Beispiele 1 bis 4 unterliegen die Filme unterschiedlicher Spannungsrißkorrosion. Zur Messung werden 1 cm breite, 100 $\mu$m dicke Filmstreifen zu einer Schlaufe mit einem Radius von 3 cm gebogen und in Tetrachlorkohlenstoff getaucht. Die Zeit bis zum Zerspringen der Filmschlaufen infolge auftretender Spannungsrisse wird gemessen. Die Ergebnisse sind in der Tabelle I zusammengefaßt.

TABELLE 1

| | Belichtungszeit sec | unlöslicher Anteil in Gew. % | Beständigkeit in Tetrachlorkohlenstoff sec |
|---|---|---|---|
| Beispiel 1 | 15 | 20 | 40 |
| | 180 | 60 | 90 |
| Beispiel 2 | 120 | 75 | 180+) |
| Beispiel 3 | 180 | 70 | 180+) |
| Beispiel 4 (Vergleichsbeispiele) | 180 | – | <1 |

+) nach 180 Sek. wurde der Test abgebrochen.

TABELLE 1a

Aus den Beispielen 1 bis 4 unter Einarbeitung von 2 Gew.–% Benzophenon hergestellte Normprüfstäbe ergeben nach entsprechender Belichtung im UL–Subj. 94 Test folgende Werte:

| | | | | |
|---|---|---|---|---|
| Beispiel 1 a | 1/8" | V 2 | 1/16" | V 2 |
| Beispiel 2 a | 1/8" | V 2 | 1/16" | V 2 |
| Beispiel 3 a | 1/8" | V 1 | 1/16" | V 2 |
| Beispiel 4 a (Vergleichsbeispiele) | 1/8" | V 2 | 1/16" | V 2 |

Biespiele 5

3916 g des Polycarbonats aus Beispiel 1 werden zusammen mit 80 g (2 Gew.-%) p-Benzoylbenzophenon und 4 g (0,1 Gew.-%) Kaliumperfluorbutansulfonat in einer Doppelwellenschnecke bei 310°C gemischt und extrudiert.

TABELLE 2

| | UL Subj. 94 1/8" | 1/16" |
|---|---|---|
| Beispiel 5 | V 0 | V 0 |
| Beispiel 6 | V 0 | V 0 |
| Beispiel 7 | V 0 | V 0 |
| Beispiel 8 (Vergleichsbeispiel) | V 1 | V 2 |

Biespiel 6

3876 g des Polycarbonats aus Beispiel 2 werden mit 120 g (3 Gew.-%) Benzophenon und 4 g (0,1 Gew.-%) Kaliumperfluorbutansulfonat in einer Doppelwellenschnecke bei 310°C vermischt und extrudiert.

Beispiel 7

3916 g des Polycarbonats aus Beispiel 3 werden mit 80 g (2 Gew.-%) Benzophenon und 4 g (0,1 Gew.-%) Kaliumperfluorbutansulfonat in einer Doppelwellenschnecke bei 310°C vermischt und granuliert.

Beispiel 8 (Vergleichsbeispiel)

3876 g des Polycarbonats aus Beispiel 4 werden mit 120 g (3 Gew.-%) Benzophenon und 4 g (0,1 Gew.-%) Kaliumperfluorbutansulfonat in einer Doppelwellenschnecke bei 310°C vermischt und extrudiert.

Die modifizierten Polycarbonate aus den Beispielen 5, 6, 7 und 8 werden zu Normprüfstäben verspritzt und 45 Sek. mit einem Philips HTQ 4 Quecksilberhochdruckbrenner im Abstand von 15 cm beidseitig belichtet. Anschließend werden die Prüfkörper nach UL Subj. 94 geprüft.

TABELLE 2 a

Aus den Beispielen 5 bis 8 hergestellte Normprüfstäbe ergeben ohne entsprechende Belichtung im UL–Subj. 94 Test folgende Werte:

| | | | | |
|---|---|---|---|---|
| Beispiel 5 b | 1/8" | V 1 | 1/16" | V 2 |
| Beispiel 6 b | 1/8" | V 1 | 1/16" | V 2 |
| Beispiel 7 b | 1/8" | V 1 | 1/16" | V 1 |
| Beispiel 8 b (Vergleichsbeispiele) | 1/8" | V 1 | 1/16" | V 2 |

**Patentansprüche**

1. Verfahren zur Modifizierung von thermoplastischen aromatischen Polycarbonaten mit aromatisch gebundenen Halogen-,primären Alkyl-, sekundären Alkyl- und/oder Alkenyl-Substituenten, dadurch gekennzeichnet, daß man diese Polycarbonate nach Zusatz von 1 Gew.-% bis 5 Gew.-%, bezogen auf Gewicht an Polycarbonat, an Photoinitiatoren und von 0,05 Gew.-% bis 5 Gew.-%, bezogen auf Gewicht an Polycarbonat, an Flammschutzmitteln, mit UV-Licht bestrahlt.

2. Verfahren gemäß Anspruch 1, dadurch gekennzeichnet, daß man Polycarbonate mit UV-Licht bestrahlt, die in bekannter Weise aus

a) 0—95 Mol-% an Diphenole der Formel I

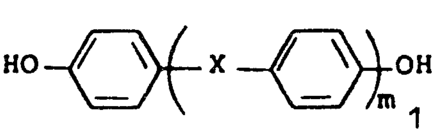

(I)

b) 5—100 Mol-% an Diphenolen der Formel II

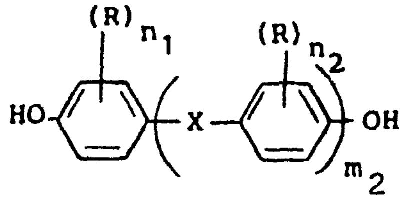

(II) und

e) 1 bis 5 Mol-% (bezogen auf die Summe der Mole Diphenole I und II) an Monophenolen der Formel III

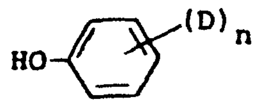

(II)

hergestellt sind, wobei in den Formeln I, II und III

X eine Einfachbindung, $C_1$—$C_8$-Alkylen, $C_2$—$C_8$-Alkyliden, $C_5$—$C_{15}$-Cycloalkylen, $C_5$—$C_{15}$-Cycloalkyliden, O, S, SO, $SO_2$ und

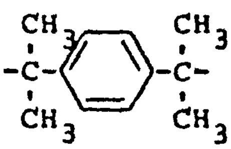

R Halogen, primäres Alkyl, sekundäres Alkyl und Alkenyl,

$m_1$,$m_2$ Null oder eins,

$n_1$,$n_2$ eine ganze Zahl zwischen Null oder 4, wobei die Summe aus $n_1$ und $n_2$ jeweils mindestens 1 sein muß,

n eine ganze Zahl von 1 bis 5 und

D Wasserstoff, Halogen, Alkyl und $\beta,\gamma$-ungesättigtes Alkyl bedeuten.

3. Verfahren zur Modifizierung von Polycarbonaten gemäß Ansprüchen 1 und 2, dadurch gekennzeichnet, daß die Photoinitiatoren durch Tauchen oder Besprühen von entsprechenden Polycarbonatformkörpern unter Verwendung von Lösungen der einzusetzenden Photoinitiatoren in gegenüber Polycarbonat inerten Lösungsmitteln appliziert werden, und die Polycarbonatformkörper anschließend getrocknet und mit UV-Licht bestrahlt werden.

4 Modifizierte Polycarbonate erhältlich nach den Verfahren der Ansprüche 1 bis 3.

**Revendications**

1. Procédé pour modifier des polycarbonates aromatiques thermoplastiques porteurs de substituants halogéno, alkyle primaire, alkyle secondaire et/ou alcényle liés à la portion aromatique, caractérisé en ce qu'il consiste à irradier ces polycarbonates par la lumière ultraviolette après addition de 1 à 5% en poids, par rapport au poids de polycarbonate, de photoinitiateurs et de 0,05 à 5% en poids, par rapport au poids du polycarbonate, de retardateurs de combustion.

2. Procédé suivant la revendication 1, caractérisé en ce qu'il consiste à irradier par la lumière ultraviolette des polycarbonates qui ont été préparés de manière connue à partir:

a) de 0 à 95 moles % de diphénols de formule I:

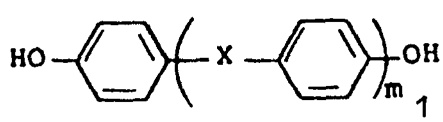

(I)

b) de 5 à 100 moles % de diphénols de formule II:

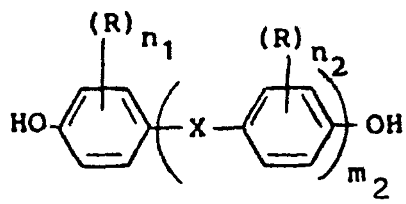

(II) et

c) de 1 à 5 moles % (par rapport à la somme des moles de diphénols I et II) de monophénols de formule III:

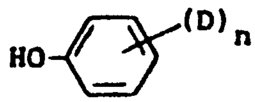

(III)

les symbols apparaissant dans les formules I, II et III ayant les valeurs suivantes:

X est une liaison simple, un groupe alkylène en $C_1$—$C_8$, un groupe alkylidène en $C_2$—$C_8$, un groupe cycloalkylène en $C_5$—$C_{15}$, un groupe alkylidène en $C_5$ à $C_{15}$, un atome d'oxygéne ou de soufre, un groupe SO, $SO_2$ ou un groupe de formule:

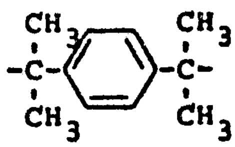

R est un halogène ou un groupe alkyle primaire, alkyle secondaire ou alcènyle,

$m_1$ et $m_2$ sont égaux à 0 ou à 1,

$n_1$ et $n_2$ représentent un nombre entier ayant une valeur de 0 à 4, la somme de $n_1$ et $n_2$ devant toujours être au moins égale à 1,

n est un nombre entier ayant une valeur de 1 à 5 et

D est un atome d'hydrogène ou d'halogène ou un groupe alkyle à insaturation $\beta$, $\gamma$.

3. Procédé de modification de polycarbonates suivant les revendications 1 et 2, caractérisé en ce que les photoinitiateurs sont appliqués par immersion ou pulvérisation de pièces moulées correspondantes en polycarbonate, en utilisant des solutions des photoinitiateurs choisis dans des solvants inertes vis-à-vis du polycarbonate, et les pièces moulées en polycarbonate sont ensuite séchées puis irradiées par la lumière ultraviolette.

4. Des polycarbonates modifiés pouvant être obtenus par les procédés suivant les revendications 1 à 3.

**Claims**

1. A process for the modification of thermoplastic aromatic polycarbonates containing aromatically bonded halogen, primary alkyl, secondary alkyl and/or alkenyl substituents, characterised in that these polycarbonates are irradiated with UV light, after adding from 1% to 5% by weight, relative to the weight of polycarbonate, of photoinitiators and from 0.05% to 5% by weight, relative to the weight of polycarbonate, of flameproofing agents.

2. The process of claim 1, characterised in that polycarbonates are irradiated with UV light which have been prepared by a known method from

a) 0 to 95 mol % of diphenols of the formula (I)

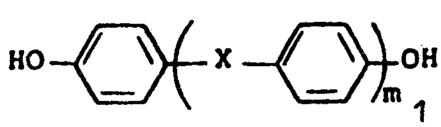

(I)

b) 5 to 100 mol % of diphenols of the formula (II)

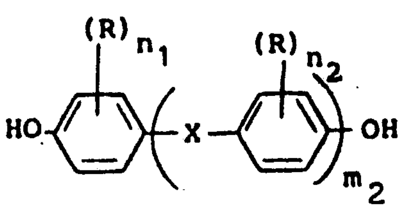

(II) and

c) 1 to 5 mol % (relative to the sum of the mols of diphenols I and II) of monophenols of the formula (III)

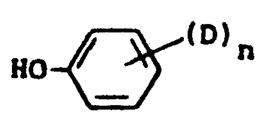

(III)

in the formulae I, II, and III

X denotes a single bond, $C_1$ to $C_8$ alkylene, $C_2$ to $C_8$ alkylidene, $C_5$ to $C_{15}$ cycloalkylene, $C_5$ to $C_{15}$ cycloalkylidene, O, S, SO, $SO_2$ and

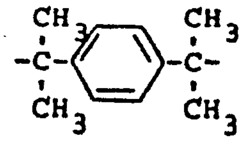

R denotes halogen, primary alkyl, secondary alkyl and alkenyl,
$m_1$ and $m_2$ denote 0 or 1,
$n_1$ and $n_2$ are an integer between 0 or 4, the sum of $n_1$ and $n_2$ must be at least 1 in each case,
n is an integer from 1 to 5 and
D denotes hydrogen, halogen, alkyl and $\beta,\gamma$-unsaturated alkyl.

3. A process for modifying polycarbonates according to claims 1 and 2, characterised in that the photo-initiators are applied by dipping or spraying appropriate polycarbonate mouldings using solutions of the photo-initiators to be used in solvents inert towards the polycarbonate, and the polycarbonate mouldings are then dried and irradiated with UV light.

4. Modified polycarbonates obtainable according to the processes of claims 1 to 3.